# EUROPEAN PATENT APPLICATION

(11) **EP 3 261 026 A1**
(43) Date of publication of application: **27.12.2017**
(21) Application number: 17176919.3
(22) Date of filing: 20.06.2017
(51) Int. Cl.: G06Q 10/00, G07F 7/06

(54) **POS DEVICE**

(30) Priority: 23.06.2016 JP 2016124699
(71) Applicant: Toshiba TEC Kabushiki Kaisha, Tokyo 141-8562 (JP); Fast Retailing Co., Ltd., Yamaguchi 754-0894 (JP)
(72) Inventor: TERAHARA, Toshiyasu, Shinagawa-ku, Tokyo 141-8562 (JP); SHIMURA, Takahiro, Shinagawa-ku, Tokyo 141-8562 (JP); YAMADA, Kouichi, Shinagawa-ku, Tokyo 141-8562 (JP); HATTORI, Daisuke, Shinagawa-ku, Tokyo 141-8562 (JP); HARAGUCHI, Ryuta, Shinagawa-ku, Tokyo 141-8562 (JP); TANAKA, Takuya, Shinagawa-ku, Tokyo 141-8562 (JP); ONO, Yasuhiro, Shinagawa-ku, Tokyo 141-8562 (JP); NAMIKI, Dai, Minato-ku, Tokyo 107-6231 (JP); TAMBARA, Takahiro, Minato-ku, Tokyo 107-6231 (JP)
(74) Representative: Takeuchi, Maya

(57) **Abstract**

According to one embodiment, a POS device includes a housing (1012), a cover (1013), a first detector (108), and a first driving mechanism (1015). The housing (1012) includes an accommodation chamber configured to accommodate a product to which an RFID tag is attached, an opening portion (1012c) for putting the product into the accommodation chamber being formed in the housing. The cover (1013) is configured to open and close the opening portion. The first detector (108) is configured to detect whether a person is present near the housing. The first driving mechanism (1015) is configured to transition the cover from a closed state in which the cover closes the opening portion to an open state in which the cover opens the opening portion, based on the detection of the person by the first detector.

## Description

### FIELD

Embodiments described herein relate generally to a POS (Point of Sales) device.

### BACKGROUND

There is a POS device (also referred to as "product sales data processing device", "checkout device", or "register device") which executes a settlement process of products, based on a customer's own operation. This POS device is equipped with a reading device which includes an RFID (Radio Frequency Identifier) antenna that reads product information batchwise from RFID tags (also referred to as "RFID chips") attached to the products.

An example of a flow at a time when the customer does shopping with use of this POS device will now be illustrated. The customer opens a door of the reading device by himself/herself, and puts products in the reading device. The customer closes the door by himself/herself. The POS device reads information from the RFID tags. The POS device executes a settlement process, based on money received from the customer. Thereafter, the customer opens the door of the reading device once again by himself/herself, and takes out the products from the reading device. The customer closes the door of the reading device by himself/herself, and ends the shopping.

When the customer performs the settlement process of products by the POS device, the customer needs to put the products with RFID tags into the reading device. However, there is a case in which the customer does not understand the position of the door in the reading device, or does not understand how to open the door.

Besides, there is a case in which the customer, who completed the settlement process of products by the POS device, forgets to take out the products from the reading device and goes away.

### BRIEF DESCRIPTION OF THE DRAWINGS

A general architecture that implements the various features of the embodiments will now be described with reference to the drawings. The drawings and the associated descriptions are provided to illustrate the embodiments and not to limit the scope of the invention.
FIG. 1 is an external-appearance view of a POS device according to an embodiment.
FIG. 2 is an external-appearance view of a reading device according to the embodiment.
FIG. 3 is a cross-sectional view of the reading device.
FIG. 4 is a block diagram of the POS device.
FIG. 5 is a functional block diagram of the POS device.
FIG. 6 is a flowchart of a process by the POS device.

### DETAILED DESCRIPTION

Various embodiments will be described hereinafter with reference to the accompanying drawings.

In general, according to one embodiment, a POS device includes a housing (1012), a cover (1013), a first detector (108), a first driving mechanism (1015), a second detector (1014), an antenna (1017), a reading unit (1018), and a settlement processor (113). The housing (1012) includes an accommodation chamber configured to accommodate a product to which an RFID tag is attached, an opening portion (1012c) for putting the product into the accommodation chamber being formed in the housing. The cover (1013) is configured to open and close the opening portion. The first detector (108) is configured to detect whether a person is present near the housing. The first driving mechanism (1015) is configured to transition the cover from a closed state in which the cover closes the opening portion to an open state in which the cover opens the opening portion, based on the detection of the person by the first detector. The second detector (1014) is configured to detect the closed state or the open state of the cover. The antenna (1017) is configured to radiate electric waves. The reading unit (1018) is configured to read price information from the RFID tag via the antenna, based on the detection of the closed state by the second detector. The settlement processor (113) is configured to execute a settlement process, based on the price information read by the reading unit.

Preferably, after the settlement processor finished the settlement process, the first driving mechanism transitions the cover from the closed state to the open state.

The POS device further may comprise a second driving mechanism configured to transition the cover from the open state to the closed state.

Preferably, after a passing of a predetermined time from when the cover transitioned from the closed state to the open state after the settlement processor finished the settlement process, the second driving mechanism transitions the cover from the open state to the closed state.

Preferably, when the first detector no longer detects the person after the settlement processor finished the settlement process, the second driving mechanism transitions the cover from the open state to the closed state.

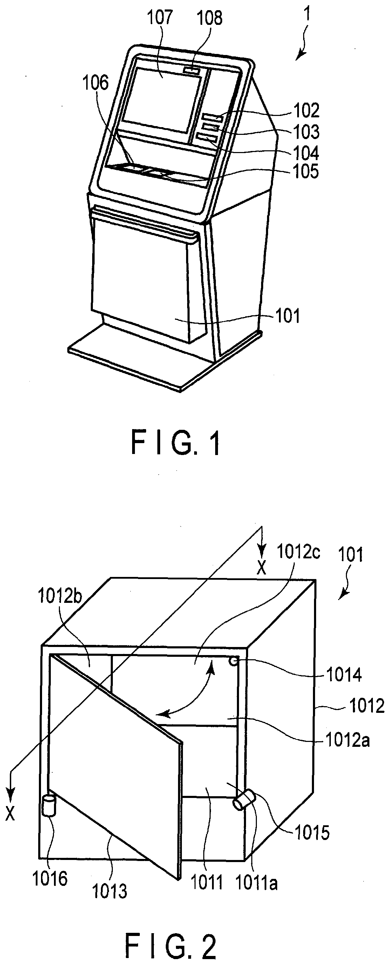

FIG. 1 is an external-appearance view of a POS device 1 which is an example according to an embodiment. The POS device 1 described in this embodiment is, for example, a device for executing at least a settlement (accounting) process, based on a customer's own operation. The settlement process is a process of settling the price of products which the customer purchases. In the present embodiment, it is assumed that RFID tags are attached to products (also referred to as "objects"). The RFID tag stores price information of the product to which this RFID tag is attached. The RFID tag stores, in some cases, identification information (also referred to as "serial code") for identifying the product. Incidentally, the RFID tag may store information other than the price information and identification information.

The POS device 1 includes a reading device 101, a card slot 102, a receipt issue slot 103, a banknote input/output port 104, a coin injection port 105, a coin take-out port 106, a display 107, and a first detector 108. Incidentally, the position where these components are provided in the POS device 1 is referred to as a front face of the POS device 1.

The reading device 101 is disposed in a lower stage of the POS device 1. The reading device 101 can accommodate products, which the customer intends to purchase, as such, or can accommodate a basket in which the products are contained. The shape of the reading device 101, and the elements, which the reading device 101 includes, will be described later. The reading device 101 reads, from each RFID tag attached to each product, various pieces of information stored in each RFID tag in a batchwise manner. For example, the reading device 101 reads batchwise price information from each RFID tag attached to each product. For example, the reading device 101 reads batchwise identification information from each RFID tag attached to each product.

The reading device 101 can also write settlement end information to the RFID tags attached to the products. The settlement end information is information indicative of the end of the settlement process of products by the POS device 1. The settlement end information contributes to crime prevention in the store. For example, a crime-prevention gate, which is installed in the store, reads the settlement end information from the RFID tag attached to the product which passes through the crime-prevention gate. If the crime-prevention gate cannot read the settlement end information, the crime-prevention gate issues an alarm. Incidentally, the reading device 101 can also write information other than the settlement end information to the RFID tag.

The card slot 102 is a unit for the customer to insert a credit card at a time of the settlement process.

The receipt issue slot 103 is a unit which issues a receipt at the time of the settlement process.

The banknote input/output port 104 is a unit into which the customer puts banknotes at the time of the settlement process. The banknote input/output port 104 is a unit from which banknotes are discharged at the time of the settlement process.

The coin injection port 105 is a unit into which the customer puts coins at the time of the settlement process.

The coin take-out port 106 is a unit from which the customer receives coins which are returned from the POS device 1 at the time of the settlement process.

The display 107 is disposed in an upper stage of the POS device 1. The display 107 displays various kinds of information at the time of the settlement process. For example, the display 107 is a liquid crystal display.

The first detector 108 is disposed in the upper stage of the POS device 1. The first detector 108 is disposed near the display 107. The first detector 108 detects (senses) whether a person is present near the reading device 101. The first detector 108 detects whether a person is present within a predetermined distance from the reading device 101. The range near the POS device 1, within which the first detector 108 detects a person, is not particularly limited. For example, the first detector 108 is a human detection sensor. A detection method by the first detector 108 is, for example, a method using infrared. However, the detection method is not particularly limited, and other methods may be used.

Next, the configuration of the reading device 101 will be described. FIG. 2 is a view illustrating, by way of example, the external appearance of the reading device 101.

The reading device 101 includes a placement table 1011, a housing 1012, a cover 1013, a second detector 1014, a first driving mechanism 1015, and a second driving mechanism 1016.

The placement table 1011 is a plate-shaped member on which a placement surface 1011a is formed. The placement surface 1011a places thereon products, to which RFID tags are attached, as such, or places thereon a basket in which the products are contained. The placement surface 1011a is a horizontal surface. The placement table 1011 is formed of a material with electric wave permeability. For example, the placement table 1011 is an insulator. The placement table 1011 is formed of a wood material or glass material. The reason why the placement table 1011 is formed of such material is that the placement table 1011 passes electric waves for executing read/write from/to the RFID tags.

The housing 102 is an exterior of the reading device 101. The housing 1012 includes an accommodation chamber 1012a which accommodates products. The accommodation chamber 1012a is formed to have such a size as to be capable of accommodating products as such, or accommodating a basket in which the products are contained. The accommodation chamber 1012a is formed by a plurality of surfaces. The space in the accommodation chamber 1012a is separated from the outside of the reading device 101 by the plural surfaces. For example, the accommodation chamber 1012a has a box shape formed of six surfaces. Incidentally, the number of surfaces, which form the accommodation chamber 1012a, is not limited to six. The housing 1012 accommodates the placement table 1011. The placement 1011a is included in the plural surfaces which form the accommodation chamber 1012a.

The housing 1012 includes a first inner surface 1012b and an opening portion 1012c.

The first inner surface 1012b includes a plurality of surfaces. The first inner surface 1012b is included in the plural surfaces which form the accommodation chamber 1012.

The opening portion 1012c is formed in the housing 1012 in order to put products into the accommodation chamber 1012a. The opening portion 1012c communicates with the inside of the accommodation chamber 1012a. The opening portion 1012c is formed in the housing 1012 so as to have such a size as to be capable of taking in and out the basket. The opening portion 1012c is formed in a plane which extends in a substantially vertical direction and forms the housing 1012. Incidentally, the opening portion 1012c may be formed at any position of the housing 1012.

The cover 1013 opens and closes the opening portion 1012c. The cover 1013 rotates about a rotational axis which extends along the vertical direction and is provided on one end side. When the cover 1013 is in a state (hereinafter referred to as "open state") in which the cover 1013 opens the opening portion 1012c, the customer can put products into the accommodation chamber 1012a from the opening portion 1012c. The cover 1013 includes a second inner surface 1013a. When the cover 1013 is in a state (hereinafter referred to as "closed state") in which the cover 1013 closes the opening portion 1012c, the second inner surface 1013a is included in the plural surfaces which form the accommodation chamber 1012a.

As described above, the accommodation chamber 1012a is formed by the placement surface 1011a, first inner surface 1012b and second inner surface 1013a.

The housing 1012 and cover 1013 are formed of a material which reflects electric waves (hereinafter referred to as "electric wave reflecting material") or a material which absorbs electric waves (hereinafter referred to as "electric wave absorbing material"). For example, the housing 1012 and cover 1013 are metals. The electric wave reflecting material or electric wave absorbing material prevents external electric waves from entering the inside of the accommodation chamber 1012a. In addition, the electric wave reflecting material or electric wave absorbing material prevents electric waves, which occur in the inside of the reading device 101, from leaking to the outside of the reading device 101. Thereby, the reading device 101 does not read electric waves from the outside. Besides, the reading device 101 does not read information from an RFID tag existing on the outside.

The second detector 1014 is disposed in an engagement surface between the housing 1012 and cover 1013 in the closed state of the cover 1013. Incidentally, the position of the second detector 1014 is not limited to this position. The second detector 1014 detects (senses) the open state or closed state of the cover 1013. The second detector 1014 is a sensor utilizing an arbitrary method. A detection method by the second detector 1014 is, for example, a method using an infrared sensor. However, the detection method is not particularly limited, and other methods may be used.

The first driving mechanism 1015 is disposed in the engagement surface between the housing 1012 and cover 1013 in the closed state of the cover 1013. Incidentally, the position of the first driving mechanism 1015 is not limited to this position. The first driving mechanism 1015 moves the cover 1013. In the closed state of the cover 1013, the first driving mechanism 1015 transitions the cover 1013 from the closed state to the open state. It should suffice if the first driving mechanism 1015 includes a mechanism which moves the cover 1013. The configuration of the first driving mechanism 1015 is of an electromagnetic type or a mechanical type, but is not particularly limited.

The second driving mechanism 1016 is disposed near the rotational axis of the cover 1013. Incidentally, the position of the second driving mechanism 1016 is not limited to this position. The second driving mechanism 1016 moves the cover 1013. In the open state of the cover 1013, the second driving mechanism 1016 transitions the cover 1013 from the open state to the closed state. It should suffice if the second driving mechanism 1016 includes a mechanism which moves the cover 1013. The configuration of the second driving mechanism 1016 is of a mechanical type or the like, but is not particularly limited. For example, the second driving mechanism 1016 is a mechanism which moves the cover 1013 by a motor.

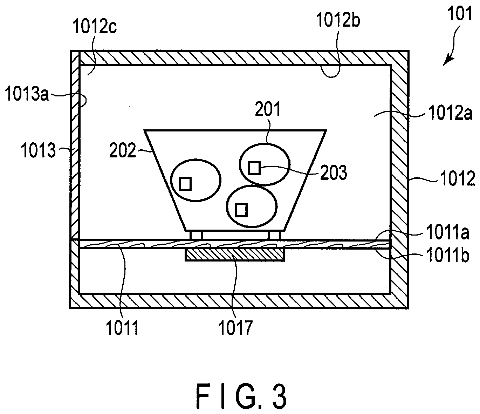

FIG. 3 is an X-X cross-sectional view of the reading device 101 in FIG. 2. The cover 1013 is in the closed state. The accommodation chamber 1012a accommodates a basket 202 in which a plurality of products 201 are contained. RFID tags 203 are attached to the respective products 201.

The placement table 1011 includes a surface 1011b which is opposed to the placement surface 1011a. In the housing 1012, there is a space defined by the surface 1011b of the placement table 1011 and the first inner surface 1012b of the housing 1012. This space in the housing 1012 is formed on a side opposite to the accommodation chamber 1012a, with the placement table 1011 being interposed.

As illustrated in FIG. 3, the reading device 101 includes an antenna 1017. The antenna 1017 is a planar RFID antenna. The antenna 1017 is supplied with electric power, thereby radiating (or emitting) electric waves of an UHF band or the like. The antenna 1017 radiates electric waves toward the inside of the accommodation chamber 1012a.

The antenna 1017 is located on the surface 1011b side which is opposed to the placement surface 1011a in the placement table 1011. The antenna 1017 is located in a position at a greater distance from the accommodation chamber 1012a than the placement surface 1011a. The antenna 1071 radiates electric waves toward the inside of the accommodation chamber 1012a. As described above, since the placement table 1011 is formed of a material with electric wave permeability, the electric waves, which the antenna 1017 radiates, pass through the placement table 1011, and reach each RFID tag 203 which is attached to each product 201 contained in the accommodation chamber 1012a. Incidentally, the reading device 101 may include a driving mechanism which moves the position of the antenna 1017. The reading device 101 may include two or more antennas.

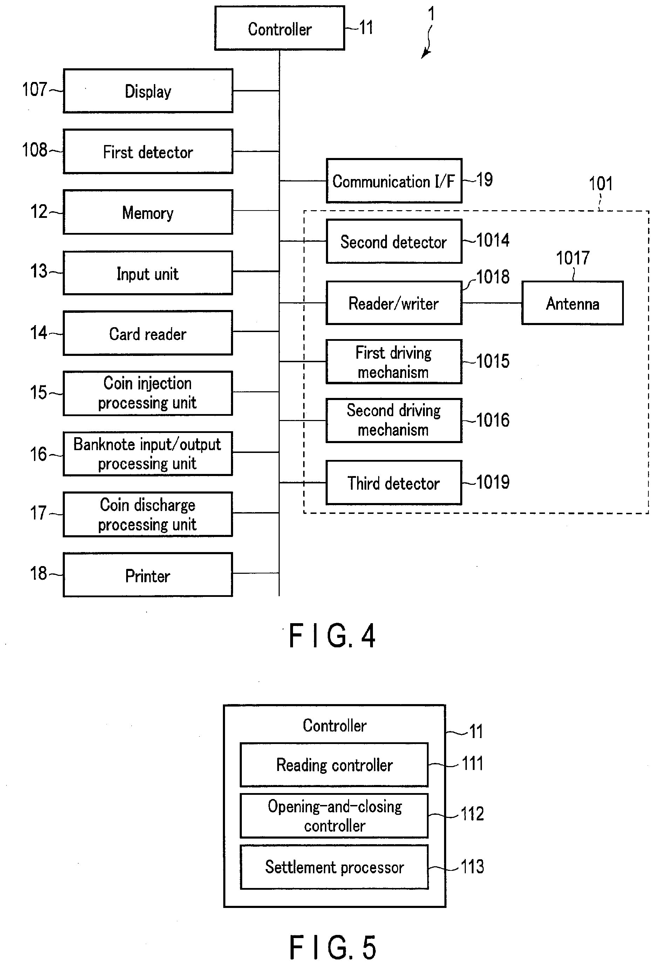

FIG. 4 is a block diagram illustrating an example of the configuration of a control system of the POS device 1. The POS device 1 includes, in addition to the above-described elements, a controller 11, a memory 12, an input unit 13, a card reader 14, a coin injection processing unit 15, a banknote input/output processing unit 16, a coin discharge processing unit 17, a printer 18, a communication I/F (interface) 19, a reader/writer 1018, and a third detector 1019.

The controller 11 is connected to the respective components of the POS device 1. The controller 11 controls the operations of the respective components. For example, the controller 11 is a CPU (Central Processing Unit).

The memory 12 can include a ROM (Read Only Memory) which stores a program that the controller 11 executes. The memory 12 can also include a RAM (Random Access Memory) which temporarily stores data when the controller 11 executes the program. The memory 12 can also include an HDD (Hard Disk Drive) which stores various data.

The input unit 13 is an element which enables a customer, who uses the POS device 1, to input or select various information. For example, the input unit 13 is a touch panel which is integral with the display 107.

The card reader 14 reads information from a credit card which is inserted in the card slot 102.

The coin injection processing unit 15 executes a process of calculating the amount of coins which the customer puts in the coin injection port 105 at a time of a settlement process.

The banknote input/output processing unit 16 executes a process of calculating the amount of banknotes which the customer puts in the banknote input/output port 104 at the time of the settlement process. The banknote input/output processing unit 16 executes a process of discharging banknotes which are returned as change at the time of the settlement process.

The coin discharge processing unit 17 executes a process of discharging coins to the coin take-out port 106, the coins being returned as change at the time of the settlement process.

The printer 18 executes a process of issuing a receipt at the time of the settlement process, and discharging the receipt from the receipt issue slot 103.

The communication I/F 19 is an interface for transmitting/receiving data to/from an external device which is connected to the POS device 1 by wire or wirelessly.

The reader/writer 1018 is disposed in the reading device 101. The reader/writer 1018 supplies electric power to the antenna 1017. The reader/writer 1018 causes the antenna 1017 to radiate electric waves for reading information stored in the RFID tag 203. The reader/writer 1018 reads information contained in a signal (hereinafter referred to as "reception signal") which is transmitted by electric waves received by the antenna 1017 from the RFID tag 203. In this manner, the reader/writer (reading unit) 1018 reads information from the RFID tag 203 via the antenna 1017. The reader/writer 1018 sends the information, which was read from the reception signal, to the controller 11. The reader/writer 1018 can also send to the antenna 1071 a signal for writing information (e.g. the above-described settlement end information) to the RFID tag 203. The reader/writer 1018 causes the antenna 1017 to radiate electric waves for transmitting this signal. In this manner, the reader/writer 1018 can write information in the RFID tag 203 via the antenna 1017.

The third detector 1019 is disposed in the reading device 101. The third detector 1019 detects (senses) whether products are present in the accommodation chamber 1012a. For example, the third detector 1019 is a weight sensor which detects the weight of objects placed on the placement surface 1011a. In this case, the third detector 1019 detects, based on the detection of the weight, that products are present in the accommodation chamber 1012a. The third detector 1019 may be a photosensor. The detection method by the third detector 1019 may be other methods, and is not particularly limited.

Next, the main functions of the controller 11 in the POS device 1 will be described. FIG. 5 is a functional block diagram illustrating, by way of example, the functions of the POS device 1. The controller 11 includes a reading controller 111, an opening-and-closing controller 112 and a settlement processor 113.

The reading controller 111 executes control to read information from the RFID tags in the accommodation chamber 1012a by using the reader/writer 1018. For example, the reading controller 111 executes control to read price information. The reading controller 111 may execute control to read information other than the price information from the RFID tags.

The opening-and-closing controller 112 executes control to transition the cover 1013 from the closed state to the open state by using the first driving mechanism 1015. The opening-and-closing controller 112 executes control to transition the cover 1013 from the open state to the closed state by using the second driving mechanism 1016.

The settlement processor 113 executes a settlement process based on information read by the reader/writer 1018. For example, the settlement processor 113 processes a credit card which the customer inserted in the card slot 102, by using the card reader 14. Alternatively, the settlement processor 113 processes cash which was put in the banknote input/output port 104 and coin injection port 105, by using the coin injection processing unit 15 and banknote input/output processing unit 16. Subsequently, based on the price information read by the reader/writer 1018, the settlement processor 113 executes the settlement process of products by the credit card or cash. Thereafter, the settlement processor 113 returns the credit card from the card slot 102. Alternatively, the settlement processor 113 discharges banknotes, which are returned as change, from the banknote input/output port 104, by using the banknote input/output processing unit 16. Alternatively, the settlement processor 113 discharges coins, which are returned as change, from the coin take-out port 106, by using the coin discharge processing unit 17.

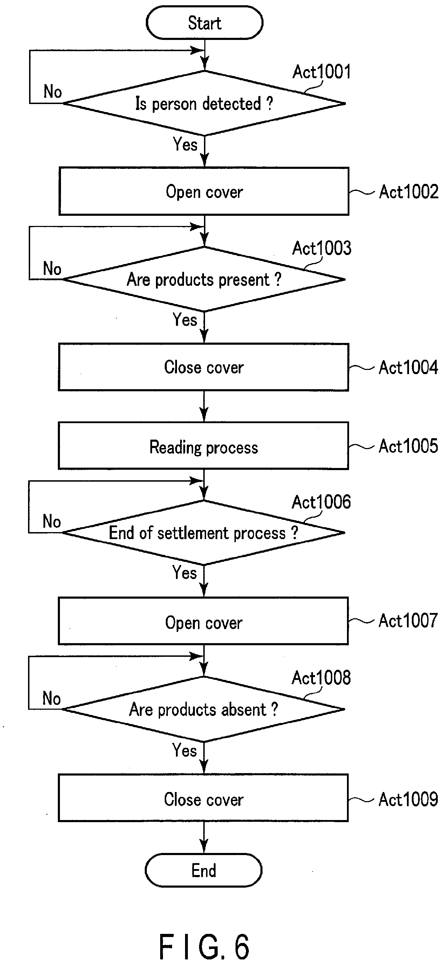

Next, the process by the POS device 1 will be described. FIG. 6 is a flowchart illustrating an example of the process by the POS device 1. Incidentally, it is assumed that the cover 1013 is in the closed state.

The first detector 108 detects whether a person is present near the POS device 1 (in particular, the accommodation chamber 1012a) (Act 1001). In general, a person, who is present near the POS device 1, is a customer who intends to use the POS device 1.

If the first detector 108 does not detect a person near the POS device 1 (Act 1001, No), the first detector 108 continues processing until detecting a person.

If the first detector 108 detects a person near the POS device 1 (Act 1001, Yes), the opening-and-closing controller 112 executes control to open the cover 1013 (Act 1002). Specifically, in Act 1002, the first driving mechanism 1015 transitions the cover 1013 from the closed state to the open state, based on the detection of the person by the first detector 108. In this manner, the POS device 1 automatically opens the cover 1013, by the customer simply approaching the POS device 1. The POS device 1 can physically inform the customer of a place into which the customer should put the products that the customer intends to purchase. Furthermore, the POS device 1 can prompt the customer to put products into the accommodation chamber 1012a.

Thereafter, the controller 11 judges whether products are present in the accommodation chamber 1012a (Act 1003). In Act 1003, the controller 11 can judge that products are present in the accommodation chamber 1012a, based on the detection of products by the third detector 1019. In the meantime, when the third detector 1019 is a weight sensor, the controller 11 may execute the process of Act 1003 as follows. While the customer is putting products into the accommodation chamber 1012a, the weight, which the third detector 1019 measures, varies. If the customer finishes putting the products into the accommodation chamber 1012a, the weight, which the third detector 1019 measures, stabilizes. Thus, when the weight, which the third detector 1019 measures, stabilized, the controller 11 may judge that the products are in the accommodation chamber 1012a. Since the POS device 1 includes the weight sensor, the controller 11 can judge, with high precision, the time at which the customer finished putting all products in the accommodation chamber 1012a.

If the controller 11 judges that products are not present in the accommodation chamber 1012a (Act 1003, No), the controller 11 continues processing until judging that the products are put in the accommodation chamber 1012a.

If the controller 11 judges that products are present in the accommodation chamber 1012a (Act 1003, Yes), the opening-and-closing controller 112 executes control to close the cover 1013 (Act 1004). In Act 1004, the second driving mechanism 1016 transitions the cover 1013 from the open state to the closed state, based on the detection of the open state by the second detector 1014 and the detection of the presence of products in the accommodation chamber 1012a by the third detector 1019.

Thereafter, the reading controller 111 executes control to read price information from the RFID tags attached to all products in the accommodation chamber 1012a (Act 1005). In Act 1005, the reader/writer 1018 reads the price information from the RFID tags via the antenna 1017, based on the detection of the closed state by the second detector 1014. In the meantime, the controller 11 may execute control to cause the display 107 to display the total amount of the prices of products, based on the price information read by the reader/writer 1018.

Subsequently, the settlement processor 113 executes a settlement process based on the price information read by the reader/writer 1018 (Act 1006). In the meantime, the controller 11 may execute control to write settlement end information to each RFID tag by using the reader/writer 1018, after the end of the settlement process. If the settlement processor 113 does not finish the settlement process (Act 1006, No), the settlement processor 113 continues the settlement process.

If the settlement processor 113 finishes the settlement process (Act 1006, Yes), the opening-and-closing controller 112 executes control to open the cover 1013 (Act 1007). Specifically, in Act 1007, after the settlement processor 113 finished the settlement process, the first driving mechanism 1015 transitions the cover 1013 from the closed state to the open state. In this manner, after finishing the settlement process, the POS device 1 automatically opens the cover 1013. The POS device 1 can prompt the customer to take out the products from the accommodation chamber 1012a. Furthermore, the POS device 1 can prevent the customer from going away without taking out the products from the accommodation chamber 1012a. Incidentally, the controller 11 may execute control to cause the display 107 to display information which prompts the customer to take out the products from the accommodation chamber 1012a.

Thereafter, the controller judges whether the products are absent in the accommodation chamber 1012a (Act 1008). In Act 1008, the controller 11 can judge that the products are absent in the accommodation chamber 1012a, based on non-detection of products by the third detector 1019. In the meantime, when the third detector 1019 is the weight sensor, the controller 11 may execute the process of Act 1008 as follows. While the customer is taking out the products from the accommodation chamber 1012a, the weight, which the third detector 1019 measures, varies. If the customer finishes taking out the products from the accommodation chamber 1012a, the weight, which the third detector 1019 measures, stabilizes. Thus, when the weight, which the third detector 1019 measures, stabilized, the controller 11 may judge that the products are absent in the accommodation chamber 1012a. Since the POS device 1 includes the weight sensor, the controller 11 can judge, with high precision, the time at which the customer finished taking out all products from the accommodation chamber 1012a.

Subsequently, the opening-and-closing controller 112 executes control to close the cover 1013 (Act 1009). Specifically, in Act 1009, after the settlement processor 113 finished the settlement process, the second driving mechanism 1016 transitions the cover 1013 from the open state to the closed state, based on the detection of the absence of products in the accommodation chamber 1012a by the third detector 1019. In this manner, the POS device 1 can automatically close the cover 1013 after the customer took out the products from the accommodation chamber 1012a. Thus, the customer can safely walk around the POS device 1.

In the meantime, the POS device 1 may omit the process of Act 1003 in the following case. For example, there is a case in which after the customer put products in the accommodation chamber 1012a, the customer presses a process start button by the input unit 13. If the controller 11 detects the pressing of this button after the process of Act 1002, the controller 11 may then execute the process of Act 1004.

Incidentally, the POS device 1 may omit the process of Act 1003 and Act 1004 in the following case. For example, there is a case in which after the customer put products in the accommodation chamber 1012a, the customer closes the cover 1013 by himself/herself. In this case, the second detector 1014 detects the closed state of the cover 1013. If the controller 11 detects the closed state of the cover 1013 after the process of Act 1002, the controller 11 may then execute the process of Act 1005.

In the meantime, the POS device 1 may omit the process of Act 1008 in the following case. For example, the controller 11 may close the cover 1013 after the passing of a predetermined time after the process of Act 1007. Specifically, after the passing of a predetermined time from when the cover 1013 transitioned from the closed state to the open state after the settlement processor 113 finished the settlement process, the second driving mechanism 1016 transitions, in Act 1009, the cover 1013 from the open state to the closed state. This predetermined time is a time in which it is assumed that the customer takes out the products from the accommodation chamber 1012a. Thus, the cover 1013 does not close before the customer takes out all products from the accommodation chamber 1012a. Incidentally, this predetermined time can arbitrarily be set. In this example, the POS device 1 does not need to include the third detector 1019, and the configuration becomes simpler.

Incidentally, the POS device 1 may omit the process of Act 1008 in the following case. For example, the controller 11 may close the cover 1013 when the first detector 108 no longer detects the person after the process of Act 1007. Specifically, when the first detector 108 no longer detects the person after the settlement processor 113 finished the settlement process, the second driving mechanism 1016 transitions, in Act 1009, the cover 1013 from the open state to the closed state. A time at which the first detector 108 no longer detects the person corresponds to a time at which the customer took out the products from the accommodation chamber 1012a and went away from the POS device 1. Thus, the cover 1013 does not close before the customer takes out all products from the accommodation chamber 1012a. In this example, the POS device 1 does not need to include the third detector 1019, and the configuration becomes simpler.

According to the present embodiment, by the opening and closing of the cover 1013, the POS device 1 can physically inform the customer of how to use the POS device 1. Therefore, the operability of the POS device 1 for the customer is improved.

In the meantime, after the second driving mechanism 1016 closed the cover 1013 in Act 1009, the second driving mechanism 1016 may lock the cover 1013 in the closed state until the cover 1013 reopens in Act 1002. By locking the cover 1013, a customer is prevented from freely opening the cover 1013 at a time other than the time of using the POS device 1 for settlement. If the cover 1013 is locked, an adverse effect due to unnecessary opening of the cover 1013 can be prevented.

Incidentally, the first driving mechanism 1015 may be a solenoid. The solenoid can slowly transition the cover 1013 from the closed state to the open state. Thus, a customer, who is present near the cover 1013, can safely take in and out products.

In the meantime, the first detector 108 may be configured to detect whether there is a person who directly faces the POS device 1. For example, the first detector 108 can detect whether there is a person who directly faces the POS device 1, by recognizing the front side of the face. Based on the detection by the first detector 108 of a person who directly faces the POS device 1, the first driving mechanism 1015 transitions the cover 1013 from the closed state to the open state. The reason for this is that a person, other than the user of the POS device 1, may come across the front side of the POS device 1. If the first detector 108 only detects whether a person is present near the POS device 1, the cover 1013 would open needlessly. In usual cases, a person, who wishes to use the POS device 1, directly faces the POS device 1. The POS device 1 can open the cover 1013 only when a person who wishes to use the POS device 1 is near the POS device 1.

According to the above-described embodiment, a POS device, which improves operability, can be provided.

## Claims

1. A POS device comprising:
a housing (1012) including an accommodation chamber configured to accommodate a product to which an RFID tag is attached, an opening portion (1012c) for putting the product into the accommodation chamber being formed in the housing;
a cover (1013) configured to open and close the opening portion;
a first detector (108) configured to detect whether a person is present near the housing;
a first driving mechanism (1015) configured to transition the cover from a closed state in which the cover closes the opening portion to an open state in which the cover opens the opening portion, based on the detection of the person by the first detector;
a second detector (1014) configured to detect the closed state or the open state of the cover;
an antenna (1017) configured to radiate electric waves;
a reading unit (1018) configured to read price information from the RFID tag via the antenna, based on the detection of the closed state by the second detector; and
a settlement processor (113) configured to execute a settlement process, based on the price information read by the reading unit.

2. The POS device of Claim 1, wherein after the settlement processor (113) finished the settlement process, the first driving mechanism transitions the cover from the closed state to the open state.

3. The POS device of any one of Claims 1 to 2, further comprising a second driving mechanism (1016) configured to transition the cover from the open state to the closed state.

4. The POS device of Claim 3, wherein after a passing of a predetermined time from when the cover (1013) transitioned from the closed state to the open state after the settlement processor finished the settlement process, the second driving mechanism (1016) transitions the cover from the open state to the closed state.

5. The POS device of Claim 3, wherein when the first detector (108) no longer detects the person after the settlement processor finished the settlement process, the second driving mechanism (1016) transitions the
cover from the open state to the closed state.
